# Europäisches Patentamt
# European Patent Office
# Office européen des brevets

(19)

(11) Veröffentlichungsnummer: **0 146 160**
**B1**

(12) **EUROPÄISCHE PATENTSCHRIFT**

(45) Veröffentlichungstag der Patentschrift:
29.06.88

(21) Anmeldenummer: **84201645.3**

(22) Anmeldetag: **14.11.84**

(51) Int. Cl.⁴: **G 02 B 6/12**

(54) Verfahren zum Herstellen eines geodätischen Bauelements und integrierte optische Anordnung die dieses Element enthält.

(30) Priorität: **15.11.83  NL 8303905**

(43) Veröffentlichungstag der Anmeldung:
**26.06.85 Patentblatt 85/26**

(45) Bekanntmachung des Hinweises auf die Patenterteilung:
**29.06.88 Patentblatt 88/26**

(84) Benannte Vertragsstaaten:
**DE FR GB IT NL SE**

(56) Entgegenhaltungen:
**EP-A-0 050 545**
**GB-A-2 027 931**
**US-A-3 542 453**
**US-A-4 141 621**
**US-A-4 243 398**
**US-A-4 403 825**

**APPLIED PHYSICS**
**LETTERS, Band 35, Nr. 3, August 1979, Seiten 234-236, A. NAUMAN et al.: "A geodesic optical wavelength lens fabricated by an anisotropic etching".**

(73) Patentinhaber: **N.V. Philips' Gloeilampenfabrieken, Groenewoudseweg 1, NL- 5621 BA Eindhoven (NL)**

(72) Erfinder: **Nicia, Antonius Josephus Adrianus, P/A INT. OCTROOIBUREAU B.V. Prof. Holstlaan 6, NL- 5656 AA Eindhoven (NL)**
Erfinder: **Khoe, Giok Djan, P/A INT. OCTROOIBUREAU B.V. Prof. Holstlaan 6, NL- 5656 AA Eindhoven (NL)**

(74) Vertreter: **Auwerda, Cornelis Petrus, INTERNATIONAAL OCTROOIBUREAU B.V. Prof. Holstlaan 6, NL- 5656 AA Eindhoven (NL)**

EP 0 146 160 B1

## Beschreibung

Die Erfindung bezieht sich auf ein Verfahren zum Herstellen eines geodätisch-optischen Bauelementes, wobei in einer Oberfläche eines Substrates durch Ätzen asphärische rotationssymmetrische Vertiefungen gebildet werden und die Oberfläche mit den Vertiefungen mit einem planaren Wellenleiter versehen sind.

Geodätisch-optische Elemente erhalten ihre Wirkung durch die Tatsache, dass eintreffende Strahlen in einem planaren Wellenleiter eingefangen werden, der auf einem Substrat mit asphärischen rotationssymmetrischen Wölbungen, beispielsweise Vertiefungen in der Oberfläche, angebracht ist. Auf diese Weise kann man beispielsweise Linsen herstellen. Die Abmessungen der Vertiefungen in dem Substrat sind genau vorgeschrieben. Die Formgenauigkeit beträgt etwa 0,5 µm.

Entsprechend einem bestimmten bekannten Verfahren werden die Vertiefungen dadurch erhalten, dass Glas in einer Form mit einer Oberfläche, die das Negativ der zu erhaltenden Substratoberfläche ist, gepresst, bzw. gegossen wird.

Auftretende Probleme dabei sind feinmechanischer Art, was die Herstellung einer Press- oder Giessform betrifft und liegen auf dem Gebiet der Formgestaltung von Glas, wo es sich um das formgetreue Pressen bzw. Giessen von Glas handelt.

Nach einem anderen Verfahren, das in "Applied Physics Letters", Bd. 35, Nr. 3, Aug. 1979, S. 234-236 beschrieben wird, wird ein geodätisch-optisches Element durch Ätzen eines anisotropen Substrates hergestellt. Die Form der durch Ätzen hergestellte Vertiefung im Substrat ist dabei jedoch abhängig von den anisotropen Ätzeigenschaften des Substrates und kann daher nur beschränkt gesteuert werden.

In Anbetracht dieser Probleme sind geodätisch-optische Elemente in der Optik noch nicht in wesentlichem Ausmass verwendet worden.

Die Erfindung hat nun u.a. zur Aufgabe, die Verwendung geodätisch-optischer Elemente zu fördern. Der Erfindung liegt u.a. die Erkenntnis zugrunde, dass die genannten Probleme wenigstens in wesentlichem Masse durch Anwendung chemischer Techniken bei der Bildung der Vertiefungen vermieden werden können.

Das eingangs erwähnte Verfahren wird nach der Erfindung daher dadurch gekennzeichnet, dass eine Oberfläche eines Trägerkörpers mit einer Anzahl nahezu gleich dicker Schichten versehen wird, die zusammen mit dem Trägerkörper ein laminiertes Substrat bilden, wobei diese Schichten eine derartige Zusammensetzung haben, dass beim Ätzen mit einem bestimmten Ätzmittel die Ätzgeschwindigkeit abhängig von der Rangnummer der Bildung der Schichten variiert, dass danach die Oberfläche des Substrats mit einer maskierenden Schicht abgedeckt wird, die gegen die Einwirkung des Ätzmittels beständig ist, dass die Oberfläche des Substrates auf der Seite der Schichten an der Stelle der zu bildenden Vertiefungen freigelegt wird, und dass hierauf die Vertiefungen durch Ätzen mit dem Ätzmittel erhalten werden und dass nach Entfernung der maskierenden Schicht der planare Wellenleiter angeordnet wird.

Vorzugsweise nimmt die Ätzgeschwindigkeit mit zunehmender Rangnummer der Bildung der Schichten ab.

Mit dem erfindungsgemässen Verfahren können Vertiefungen mit der erforderlichen Genauigkeit in der Substratoberfläche gebildet werden und es ergibt sich die Möglichkeit einer wirtschaftlich vertretbaren Herstellung geodätisch-optischer Elemente. Auch optische Vorrichtungen, in denen derartige Elemente integriert sind, können nun hergestellt werden.

Ein Ausführungsbeispiel der Erfindung ist in der Zeichnung dargestellt und wird im folgenden näher beschrieben. Es zeigen

Fig. 1, 2 und 3 eine schematische Darstellung eines Teils eines Schnittes durch ein geodätisch-optisches Element in aufeinanderfolgenden Herstellungsschritten mit Hilfe des erfindungsgemässen Verfahrens,

Fig. 4 einen schematischen Schnitt durch eine Vorrichtung zum Durchführen des erfindungsgemässen Verfahrens.

Bei dem als Beispiel zu beschreibenden Verfahren wird ein geodätisch-optisches Element hergestellt, wobei in einer Oberfläche 1 eines laminierten Substrates 2 asphärische rotationssymmetrische Vertiefungen 3 gebildet werden und die Oberfläche 1 mit den Vertiefungen 3 mit einem planaren Wellenleiter 4 versehen wird.

Nach der Erfindung wird eine Oberfläche 5 eines Trägerkörpers 6 mit einer Anzahl nahezu gleich dicker Schichten 7 versehen, die zusammen mit dem Trägerkörper 6 das laminierte Substrat 2 bilden, wobei diese Schichten 7 eine derartige Zusammensetzung aufweisen, dass beim Ätzen mit einem Ätzmittel die Ätzgeschwindigkeit abhängig von der Rangnummer der Bildung der Schichten variiert.

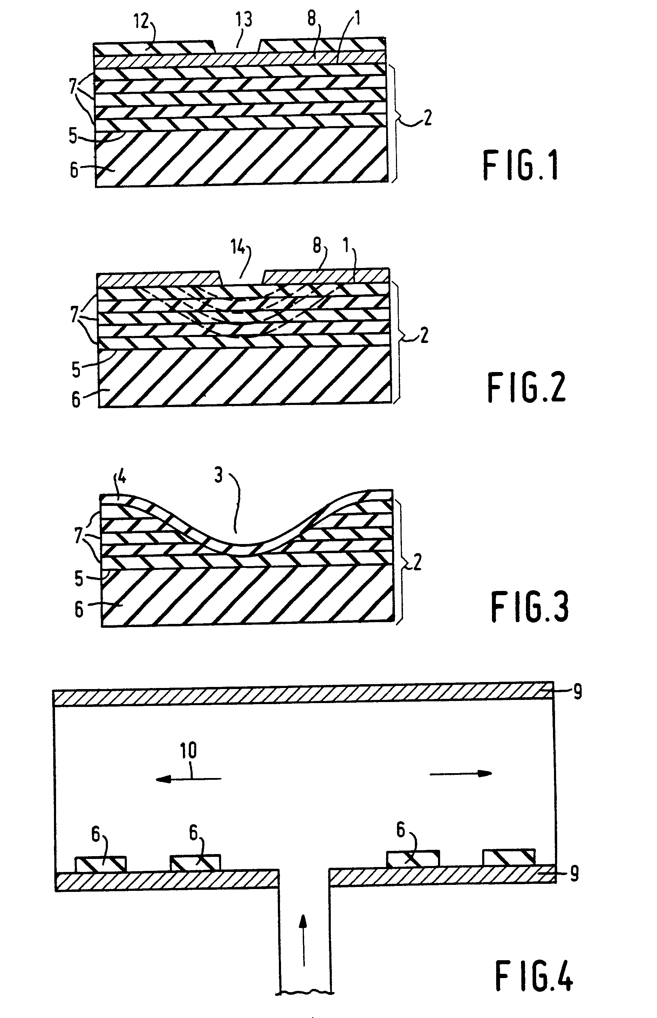

Danach wird die Oberfläche 1 des Substrates 2 mit einer maskierenden Schicht 8 abgeschirmt, die gegen die Einwirkung des Ätzmittels beständig ist, wobei die Oberfläche 1 des Substrates 2 auf der Seite der Schichten an der Stelle der zu bildenden Vertiefungen 3 freigelegt wird (siehe Fig. 2).

Danach werden die Vertiefungen 3 durch Ätzen mit dem Ätzmittel erhalten und wird nach Entfernung der maskierenden Schicht 8 der planare Wellenleiter 4 angeordnet.

Vorzugsweise nimmt die Ätzgeschwindigkeit mit zunehmender Rangnummer der Bildung der Schichten ab.

Bei der Herstellung des geodätisch-optischen Elementes, in diesem Beispiel einer Linse, wird beispielsweise von einem Trägerkörper 6 mit einer Länge und Breite von einigen cm und bestehend aus Quarzglas ausgegangen. Der Trägerkörper 6 wird in einen dosenförmigen Reaktor mit kapazitiv gekoppelten Platten 9, zwischen denen ein HF-Feld mit einer Frequenz von 13 MHz erzeugt wird, gebracht.

Mit Hilfe eines nicht-isothermen Plasma-CVD-Verfahrens werden aus einer Gasphase die Schichten 7 auf dem Trägerkörper 6 niedergeschlagen. Unter einem nicht-isothermen Plasma-CVD-Verfahren wird ein Verfahren verstanden, bei dem mit einem sogenannten kalten Plasma gearbeitet wird, worin nur Elektronen eine hohe kinetische Energie aufweisen. Mit einem derartigen Plasma kann man sogar Gasgemische zum Reagieren bringen, die thermisch nicht reaktiv sind. Bei diesem Verfahren können mit Erfolg relativ niedrige Substrattemperaturen (60-80°C) angewandt werden und es werden rissfreie Schichten erhalten. Die Trägerkörper 6 befinden sich beim Niederschlagen der Schichten 7 auf einer Temperatur von etwa 60°C. Die Schichten 7 werden aus einem Gasstrom 10, der Silan ($SiH_4$), Ammoniak ($NH_3$), Argon (Ar) und schrittweise abnehmende Mengen Distickstoffoxyd ($N_2O$) enthält, niedergeschlagen. Die Zusammensetzung der Gasphase wird auf übliche Weise diskontinuierlich und mit kurzen Intervallen derart geändert, dass in einigen Stunden etwa 1000 Schichten mit einer Dicke von je etwa 1 μm bei einem Druck von 1-5 Torr niedergeschlagen werden.

Die Schichten variieren in praktisch gleichen Schritten in ihrer Zusammensetzung, wodurch bei der später durchzuführenden Ätzbehandlung wannenförmige Vertiefungen 3 erhalten werden.

Die Oberfläche 1 des auf diese Weise erhaltenen Substrates 2 wird mit einer gegen das Ätzmittel maskierenden 0,2 μm dicken Chromschicht 8 versehen. Mit Hilfe einer Photolackschicht 12 wird auf übliche Weise nach Belichten und Entwickeln entsprechend dem Muster der Vertiefungen 3 über kreisförmige Öffnungen 13 (Durchmesser 10 μm) in der Photolackschicht 12 Öffnungen 14 mit etwa demselben Durchmesser auf übliche Weise in der Chromschicht 8 an der Stelle, wo die Vertiefungen gebildet werden müssen, geätzt.

Die Photolackschicht 12 wird entfernt und über die Öffnungen 14 in der Chromschicht 4 werden die Vertiefungen 3 mit Hilfe des Ätzmittels, das aus Phosphorsäure besteht, geätzt. Wannenförmige Vertiefungen werden in einigen Tagen gebildet. Diese sind etwa 600 μm tief und haben einen Durchmesser an der Oberfläche 1 von etwa 2 mm.

Nach Entfernung der maskierenden Schicht 8 wird der planare Wellenleiter 4 in Form einer 50 μm dicken Schicht aus Material mit höherem Brechungsindex als das Material des Substrats, beispielsweise Siliziumnitrid, nachdem zuerst eine 10 μm dicke optische Pufferschicht aus Siliziumdioxyd angeordnet ist, angebracht.

Auf übliche Weise wird die auf diese Weise erhaltene Linse fertiggestellt und gegebenenfalls integriert mit anderen Elementen in einer optischen Vorrichtung.

## Patentansprüche

1. Verfahren zum Herstellen eines geodätisch-optischen Elementes, wobei in einer Oberfläche (1) eines Substrates (2) durch Ätzen asphärische rotationssymmetrische Vertiefungen (3) gebildet werden und die Oberfläche mit den Vertiefungen mit einem planaren Wellenleiter (4) versehen wird, dadurch gekennzeichnet, dass eine Oberfläche (5) eines Trägerkörpers (6) mit einer Anzahl nahezu gleich dicker Schichten (7) versehen wird, die zusamme mit dem Trägerkörper ein laminiertes Substrat (2) bilden, wobei diese Schichten (7) eine derartige Zusammensetzung haben, dass beim Ätzen mit einem bestimmten Ätzmittel die Ätzgeschwindigkeit abhängig von der Rangnummer der Bildung der Schichten variiert, dass danach die Oberfläche (1) des laminierten Substrates (2) mit einer maskierenden Schicht (8) abgeschirmt wird, die gegen die Einwirkung des Ätzmittels beständig ist, dass die Oberfläche (1) des Substrates (2) auf der Seite der Schichten (7, 8) an der Stelle (14) der zu bildenden Vertiefungen freigelegt wird, und dass hierauf die Vertiefungen (3) durch Ältzen mit dem Ätzmittel erhalten werden und nach Entfernung der maskierenden Schicht (8) der planare Wellenleiter (4) angeordnet wird.

2. Verfahren nach Anspruch 1, dadurch gekennzeichnet, dass die Ätzgeschwindigkeit mit zunehmender Rangnummer der Bildung der Schichten (7) abnimmt.

3. Verfahren nach Anspruch 1 oder 2, dadurch gekennzeichnet, dass die Schichten (7) mit Hilfe eines nicht-isothermen Plasma-CVD-Verfahrens gebildet werden.

4. Optische Vorrichtung, in der mindestens ein geodätisch-optisches Element, das mit Hilfe des Verfahrens nach einem der vorstehenden Ansprüche hergestellt ist, integriert ist.

## Claims

1. A method of manufacturing a geodetic-optical component, in which non-spherical rotationally symmetrical recesses (3) are formed in a surface (1) of a substrate (2) by etching, and the surface with the recesses is provided with a planar waveguide (4), characterized in that a surface (5) of a support (6) is provided with a number of substantially equally thick layers (7) which together with the support form a laminated substrate (2), said layers (7) having such a composition that upon etching with a given etchant the etching rate varies in accordance with the sequence in which the layers are formed, the surface (1) of the laminated substrate (2) being screened by means of a masking layer (8) which can withstand the action of the etchant, the surface (1) of the substrate (2) being exposed on the side of the layers (7, 8) at the area (14) of the recesses to be formed, the recesses (3) being obtained by etching by means of the etchant and the planar waveguide (4) being provided after removing the masking layer (8).

2. A method as claimed in Claim 1, characterized in that the etching rate decreases as the number of layers (7) formed increases.

3. A method as claimed in Claim 1 or 2, characterized in that the layers (7) are formed by means of a non-isothermal plasma CVD method.

4. An optical device in which at least one geodetic-optical component manufactured by means of the method as claimed in any of the preceding Claims is integrated.

**Revendications**

1. Procédé pour la fabrication d'un élément géodésique-optique, selon lequel des enfoncements à symetrie de révolution asphériques (3) sont réalisés par décapage dans une surface (1) d'un substrat (2) et la surface comportant les enfoncements est munie d'un guide d'ondes planaire (4), caractérisé en ce qu'une surface (5) d'un corps de support (6) est munie de plusieurs couches d'une épaisseur pratiquement égale (7), qui constituent, de concert avec le corps de support, un substrat laminé (2), ces couches (7) présentant une composition telle que lors du décapage avec un agent de décapage déterminé, la vitesse de décapage varie suivant le numéro d'ordre de la formation des couches, que la surface (1) du substrat laminé (2) est ensuite recouverte d'une couche de masquage (8) qui résiste à l'agent de décapage, que la surface (1) du substrat (2) est découverte du côté des couches (7, 8) à l'endroit des enfoncements à former et qu'ensuite les enfoncements (3) sont obtenus par décapage avec l'agent de décapage et qu'après l'enlèvement de la couche de masquage (8), le guide d'ondes planaire (4) est disposé.

2. Procédé selon la revendication 1, caractérisé en ce que la vitesse de décapage diminue avec le numéro d'ordre croissant de la formation des couches (7).

3. Procédé selon la revendication 1 ou 2, caractérisé en ce que les couches (7) sont formées à l'aide d'un procédé DCV au plasma non isotherme.

4. Dispositif optique lequel est integré au moins un élément géodésique-optique, qui est réalisé à l'aide du procédé selon l'une des revendications précédentes.

0 146 160

FIG.1

FIG.2

FIG.3

FIG.4